# EUROPEAN PATENT APPLICATION

(11) **EP 4 819 424 A1**
(43) Date of publication of application: **07.10.2026**
(21) Application number: 25167829.8
(22) Date of filing: 01.04.2025
(51) Int. Cl.: H02J 3/00

(54) **POWER DISTRIBUTION SYSTEM**

(71) Applicant: GE Energy Power Conversion Technology Limited, Rugby, Warwickshire CV21 1BD (GB)
(72) Inventor: Permuy, Alfred, 91140 Villebon sur Yvette (FR)
(74) Representative: Casalonga

(57) **Abstract**

A power device (5) main input terminals (6) configured to be connected to a grid (G), an AC/AC power converter (7) operatively coupled to the main input terminals (6) and to an AC main bus (10) powered by the AC/AC power converter (7). The power device also comprises a plurality of power branches (11, 12, 13). Each power branch (11, 12, 13) comprises input terminals (14, 15, 16) connected to the AC main bus (10), and at least one set of output terminals (17, 18, 19) configured to be connected to a load (2, 3, 4). At least one power branch (11, 12, 13) comprises at least one dimmer (22, 23) characterized in that each dimmer (22, 23) comprises two thyristors (35, 36), and a control circuit (41) configured to control the two thyristors (35, 36) to trigger into conduction or to block either one of the first thyristor (35) or the second thyristor (36) or both, so that the AC main bus (10) powers or not the said load (2, 3, 4).

## Description

### FIELD OF THE INVENTION

The present invention relates to a power device, a facility comprising such a power device and a method for controlling such a power device.

### BACKGROUND

A plant may comprise a plurality of loads, that each may have different power requirements. Therefore, the architecture of such a plant may comprise a different power branch for each load.

When maintenance operations need to be done on a single or on some loads, it is preferrable that the plant keeps running so that the other non-maintained loads can work normally.

However, in traditional solutions, when plugging back the previously maintained loads, the plant must be shunted down to prevent failure on the previously maintained loads.

There is therefore a need for a plant able to keep running during maintenance and that does not need to be shunted to restart the power supply of the loads.

### SUMMARY OF THE INVENTION

In view of the foregoing, the invention proposes a power device comprising main input terminals configured to be connected to a grid, an AC/AC power converter operatively coupled to the main input terminals and to an AC main bus powered by the AC/AC power converter. The power device also comprises a plurality of power branches. Each power branch comprises input terminals connected to the AC main bus and at least one set of output terminals configured to be connected to a load. At least one power branch of the plurality of power branches comprises at least one dimmer comprising first terminals operatively coupled to the input terminals of the said power branch and second terminals operatively coupled to the output terminals of the said power branch. Each dimmer comprises two thyristors, the cathode of a first thyristor of the two thyristors and the anode of a second thyristor of the two thyristors being connected to the first terminals of each dimmer, and the anode of the first thyristor of the two thyristors and the cathode of the second thyristor of the two thyristors being connected to the second terminals of each dimmer. Each dimmer further comprises a control circuit configured to control the two thyristors to trigger into conduction the first thyristor or the second thyristor so that the AC main bus powers the said load through the triggered thyristor, or trigger into conduction the first thyristor and the second thyristor so that the AC main bus powers the said load through both thyristors, or block conduction both thyristors so that the said load is not powered by the AC main bus.

Advantageously, the said power branch may further comprise a breaker connecting the input terminals of the said power branch and the first terminals of each dimmer.

Advantageously the said power branch may also further comprise a transformer connecting the second terminals of each dimmer and the output terminals of the said power branch.

Preferably, the said power branch may further comprise a rectifier connected to the transformer of the said power branch configured to power the load connected to the said power branch.

Advantageously, the power device may further comprise an AC/AC power converter operatively coupled to the main input terminals and to the AC main bus to power the AC main bus from the grid.

Preferably, the power device may further comprise a main breaker connected to the main input terminals and to the AC/AC power converter.

Another object of the present invention relates to a facility comprising a plurality of loads and the power device as defined above, each load of the plurality of loads being connected to a set of output terminals of a power branch.

Another object of the present invention relates to a method for controlling a power device comprising main input terminals connected to a grid, an AC/AC power converter operatively coupled to the main input terminals, and an AC main bus operatively coupled to the AC/AC power converter and powered by the AC/AC power converter.

The power device further comprises a plurality of power branches. Each power branch comprising input terminals connected to the AC main bus and at least one set of output terminals configured to be connected to a load. At least one power branch comprises at least one dimmer comprising first terminals operatively coupled to the input terminals of the said power branch and second terminals operatively coupled to the output terminals of the said power branch. Each dimmer comprises two thyristors, the cathode of a first thyristor of the two thyristors and the anode of a second thyristor of the two thyristors being connected to the first terminals of each dimmer, and the anode of the first thyristor of the two thyristors and the cathode of the second thyristor of the two thyristors being connected to the second terminals of each dimmer, and a control circuit. The method comprises:
- triggering into conduction with the control circuit, the first thyristor or the second thyristor so that the AC main bus powers the said load through the triggered thyristor; or
- triggering into conduction with the control circuit, the first thyristor and the second thyristor so that the AC main bus powers the said load through both thyristors; or
- blocking conduction with the control circuit, of both thyristors so the said load is not powered by the AC main bus.

### BRIEF DESCRIPTION OF THE DRAWINGS

Other features and advantages of the present invention will become apparent from the following description given only by way of example and in view of the following drawings in which:
FIG. 1 illustrates an embodiment of a facility according to the invention;
FIG. 2 illustrates an embodiment of a dimmer according to the invention;
FIG. 3 illustrates an embodiment of a power branch according to the invention; and
FIG. 4 illustrates another embodiment of a power branch according to the invention.

### DETAILED DESCRIPTION OF THE INVENTION

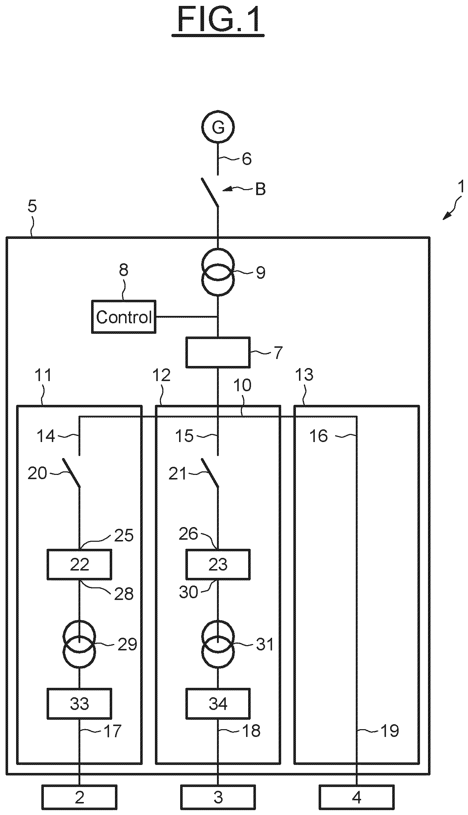

Figure 1 illustrates an example of a facility 1 comprising a plurality of loads 2, 3, 4 and a power device 5.

The power device 5 comprises main input terminals 6 connected to a grid G through a main breaker B. The power device 5 is only connected to the grid G in one point by the main breaker B. This ensures that the whole power device 5 may be disconnected all at once from the grid G quickly and easily thanks to the main breaker B. Moreover, this reduces complexity of the whole facility 1 as there is only one connection point between the main input terminals 6 and the power device 5.

The grid G may be a three-phase grid delivering a three-phase current *I_{G}.*

In variant, the grid may be a M-phase grid delivering a M-phase current *I_{G}*, M being an integer greater than zero.

The grid G may be powered for example by a solar farm comprising at least one solar panel, a wind farm comprising at least one wind turbine and/or any renewable power plant.

Each load 2, 3, 4 is connected to the power device 5.

A load is any electrical component or device that requires direct current (DC) or alternative current (AC) power.

The power device 5 comprises an alternating current AC/ alternating current AC power converter 7 and a control circuit 8.

The output terminals of the AC/AC power converter 7 are X-phase output terminals, X being an integer greater than zero, so that the output terminals deliver a X-phase power current.

It is assumed that X is equal to one so that the AC/AC power converter 7 delivers a single-phase power current at its output terminals.

The power device 5 further comprises a main transformer 9 comprising a primary circuit connected to the main breaker B and a secondary circuit connected to the input terminals of the AC/AC power converter 9.

The main transformer 9 permits to adapt the voltage powered by the grid G to the AC/AC power converter 7 for example to optimize the design of the AC/AC power converter 7, for example to reduce the cost of the AC/AC power converter 7, and to filter perturbations on the grid G, for example overvoltage. Therefore, the main transformer 9 allows to get rid of a filter.

In another embodiment, the power device 5 does not comprise the main transformer 9, the input terminals of the AC/AC power converter 7 being directly connected to the breaker B.

The power device 5 further comprises an AC main bus 10 operatively coupled to the AC/AC power converter 7. The AC main bus 10 delivers power to a plurality of power branches 11, 12, 13. The number of the plurality of power branches may be equal to the number of the plurality of loads 2, 3, 4. Here, it is assumed that the facility 1 comprises three power branches 11, 12, 13.

Each power branch 11, 12, 13 comprises input terminals 14, 15, 16 and a set of output terminals 17, 18, 19.

The input terminals 14, 15, 16 of the power branches 11, 12, 13 are connected to the AC main bus 10.

The set of output terminals 17 of a first power branch 11 are connected to the first load 2, the set of output terminals 18 of a second power branch 12 are connected to the second load 3, the set of output terminals 19 of the third power branch 13 are connected to the third load 4.

The power branches 11, 12 comprise a breaker 20, 21 connected to the input terminals 14, 15 of the said power branches 11, 12. The power branch 13 does not comprise any breaker. Each power branch 11, 12, 13 may or may not comprise a breaker.

The breaker 20, 21 may be opened or closed so that the current may or may not flow within the power branch 11, 12.

The power branches 11, 12 further comprise a dimmer 22, 23 connected to the breaker 20, 21. The power branch 13 does not comprise any dimmer. Each power branch 11, 12, 13 may or may not comprise at least one dimmer.

The dimmer 22 of the power branch 11 comprises first terminals 25 connected to the breaker 20 and the dimmer 23 of the power branch 12 comprises first terminals 26 connected to the breaker 21. The dimmer 22 of the power branch 11 further comprises second terminals 28 connected to a transformer 29 and the dimmer 23 of the power branch 12 further comprises second terminals 30 connected to a transformer 31.

The power branches 11, 12 further comprise a rectifier 33, 34 connected to the transformer 29, 31. The power branch 13 does not comprise any transformer nor any rectifier. In fact, the plurality of power branches 11, 12, 13 may or may not comprise a transformer and/or a rectifier. In variants, each power branch 11, 12, 13 may comprise more than one rectifier, for example, each power branch 11, 12, 13 comprises two, three, four, five, six, seven, eight, nine, or ten rectifiers.

Consequently, the loads 2, 3 are DC loads as the rectifiers 33, 34 delivers DC current to the loads 2, 3 and the load 4 is an AC load as the power branch 13 does not comprise any rectifier.

The transformers 29, 31 may have a same transformation ratio or at least one branch transformer may have a different transformation ratio than the transformation ratio of another branch transformer.

Optionally, each power branch 11, 12 may further comprise a resistor (not shown) connected to the rectifier 33, 34.

All the power branches 11, 12, 13 may be identical.

In variant, each power branch 11, 12, 13 may be connected to a different load 2, 3, 4 and therefore may have a different number of dimmers, may have differently configured transformer 29, 31, or may have a different rectifier 33, 34.

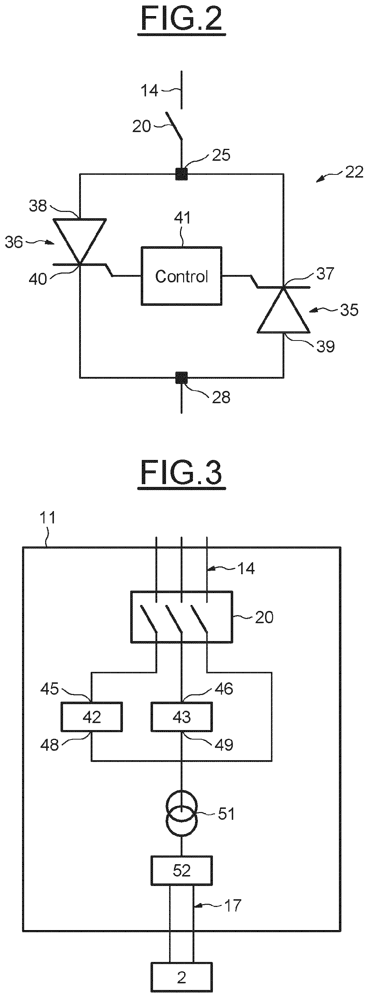

Figure 2 illustrates an example of the dimmer.

The dimmer 22 comprises the first terminals 25 operatively coupled to the breaker 20 of the power branch 11 and the second terminals 28 operatively coupled to the transformer 29 (not shown). The dimmer 22 comprises two thyristors 35, 36, the cathode 37 of a first thyristor 35 of the two thyristors 35, 36 and the anode 38 of a second thyristor 36 of the two thyristors 35, 36 being connected to the first terminals 25 of the dimmer 22, and the anode 39 of the first thyristor 35 of the two thyristors 35, 36 and the cathode 40 of the second thyristor 36 of the two thyristors 35, 36 being connected to the second terminals 28 of the dimmer 22.

The dimmer 22 further comprises a control circuit 41 to control the two thyristors 35, 36 to trigger into conduction the first thyristor 35 or the second thyristor 36 so that the AC main bus 10 powers the said load 2 through the triggered thyristor 35, 36, or trigger into conduction the first thyristor 35 and the second thyristor 36 so that the AC main bus 10 powers the said load 2 through both thyristors 35, 36, or block conduction both thyristors 35, 36 so that the said load 2 is not powered by the AC main bus 10. The number of phases X may take another value than one, for example three.

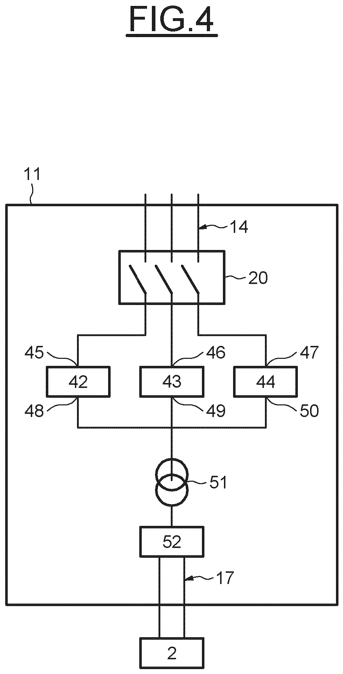

Figures 3 and 4 illustrate an embodiment of a power branch wherein X is equal to three.

The power branch 11 comprises the input terminals 14 and the set of output terminals 17. The input terminals 14 of the power branch 11 are connected to the AC/AC power converter 7 (not shown in these figures). The set of output terminals 17 of the power branch 11 are connected to the load 2. The power branch 11 comprises a breaker 20 connected to the input terminals 14 of the said power branch 11.

In Figure 3, only a first phase and a second phase of the power branch 11 comprise a dimmer 42, 43 connected to the breaker 20 and to a transformer 51 of the power branch 11. A third phase of the power branch 11 does not comprise a dimmer and is connected directly to the transformer 51.

The dimmers 42, 43 of the power branch 11 comprises first terminals 45, 46 connected to the breaker 20 and second terminals 48, 49 connected to the transformer 51. The power branch 11 further comprise a rectifier 52 connected to the transformer 51.

Contrary to figure 3, in Figure 4, the third phase of the power branch 11 comprises a dimmer 44 connected to the breaker 20.

The dimmer 44 of the third phase of the power branch 11 comprises first terminals 47 connected to the breaker 20 and second terminals 50 connected to the transformer 51. The power branch 11 further comprises a rectifier 52 connected to the transformer 51.

In the general case, for a X-phase, at least X-1 phases of at least one power branch comprise a dimmer, preferably each phase of the at least the one power branch comprises a dimmer. When X is equal to one, the said phase of the said power branch comprises a dimmer.

In the following, examples of implementations of the power device 5 are disclosed.

It is assumed that the breaker B is closed so that the main input terminals 6 powers the main transformer 9 and the breakers 20, 21 are closed so that the AC main bus 10 powers the power branches 11, 12, 13.

The AC/AC power converter 7 is controlled by the control circuit 8 so that the output terminals of the AC/AC power converter 7 deliver a three-phase power voltage from the power delivered by the grid G, the amplitude of the three-phase power voltage being equal to a predetermined value.

The AC/AC power converter 7 powers the AC main bus 10 that powers the power branches 11, 12, 13 connected in parallel to the output terminals 11 of the AC/AC power converter 7 with the power voltage.

The power branches 11, 12, 13 powers their respective loads 2, 3, 4.

Each DC load 2, 3, 4 is controlled regardless the other DC loads 2, 3, 4 connected to the power device 5. Further the power device 5 implements only one AC/AC power converter 7 contrary to a power system known from the prior art wherein each DC load 2, 3, 4 is connected to a dedicated AC/AC power converter.

The control circuit 8 may further control the AC/AC power converter 7 so that the frequency of the power current is higher than the frequency of a grid current delivered by the grid G allowing to reduce the size of the power branches 11, 12, 13.

For example, the frequency of the grid current is equal to 50 Hz and the AC/AC power converter 7 is preconfigured so that the frequency of the power current is equal to 100 Hz. As the frequency of the power current is twice as the frequency of the grid current *I_{G}*, the cost and the size of the power branches 11, 12, 13 may be divided by about two.

The breaker 20, 21 of the power branches 11, 12 may be opened so that the load 2, 3 connected to the said power branch is not powered with a current.

The power branch 11, 12 is not powered for example when a fault is detected in the said power branch, or in the load 2, 3, or an insulation fault of the said power branch. The power branch 11, 12 may also be shunted when maintenance operations are carried out or when a load 2, 3 needs to be changed. This allows to continue powering the other power branches 11, 12, 13 without having to turn off the whole facility 1. In such configuration, each load 2, 3 may be isolated such that if one load 2, 3 experiences a fault or a surge, it will not affect the other loads 2, 3, 4 thus enhancing overall reliability of the power device 5. This also reduces the risk of cascading failures. In case of a malfunction in one power branch 11, 12, the others power branches 11, 12, 13 remain unaffected as the failed power branch 11, 12 may be isolated.

Moreover, when the maintenance operations have been carried out, the breaker 20, 21 of the said power branch 11, 12 affected by the maintenance operations may be closed to let the current flow again in the said power branch 11, 12. Then, the control circuit 41 of the one or more dimmers 22, 23 of the said power branch 11, 12, 13 may control the thyristors 35, 36 such that the current delivered to the load 2, 3, 4 is progressively increased. This prevents from powering a too high-power voltage to a load 2, 3, 4.

The control circuit 41 may trigger the second thyristor 36 when the voltage at the first terminals 25 of the dimmer 22 has reached a predetermined positive value to control the value of the current delivered to the load 2, the value of the current delivered being equal to the sum of the current between the instant associated to the predetermined positive value and the instant associated to a nil voltage at the first terminals 25 of the dimmer 22.

Similarly, the control circuit 41 may trigger the first thyristor 35 when the voltage at the first terminals 25 of the dimmer 22 has reached a predetermined negative value to control the value of the current delivered to the load 2, the value of the current delivered being equal to the sum of the current between the instant associated to the predetermined negative value and the instant associated to a nil voltage at the first terminals 25 of the dimmer 22.

The value of the current delivered to the load 2 may be a value between 0% and 100% of the value of the delivered by the AC/AC power converter 7.

For example, the control circuit 41 may deliver a gate current to trigger the first thyristor 35 when the value of the phase voltage at the first terminals 25 of the dimmer 22 reaches its phase minimum value. The control circuit 41 may deliver a gate current to trigger the second thyristor 36 when the value of the phase voltage at the first terminals 25 of the dimmer 22 reaches its phase maximum value.

The breakers 20, 21 makes it easier to perform maintenance on some load 2, 3, and/or on its power branch 11, 12 while the rest of the loads 2, 3, 4 are kept powered by their own power branch 11, 12, 13.

The power device 5 gives scalability to the facility 1 as new loads can be added with their own dedicated power branches without significant changes to the existing facility 1.

## Claims

1. A power device (5) comprising:
- main input terminals (6) configured to be connected to a grid (G);
- an AC/AC power converter (7) operatively coupled to the main input terminals (6);
- an AC main bus (10) operatively coupled to the AC/AC power converter (7) and powered by the AC/AC power converter (7); and
- a plurality of power branches (11, 12, 13), each power branch (11, 12, 13) comprising:
• input terminals (14, 15, 16) connected to the AC main bus (10); and
• at least one set of output terminals (17, 18, 19) configured to be connected to a load (2, 3, 4),
at least one power branch (11, 12, 13) comprises at least one dimmer (22, 23) comprising first terminals (25, 26) operatively coupled to the input terminals (14, 15, 16) of the said power branch (11, 12, 13) and second terminals (28, 30) operatively coupled to the output terminals (17, 18, 19) of the said power branch (11, 12, 13), **characterized in that** each dimmer (22, 23) comprises two thyristors (35, 36), the cathode (37) of a first thyristor (35) of the two thyristors (35, 36) and the anode (38) of a second thyristor (36) of the two thyristors (35, 36) being connected to the first terminals (25, 26) of each dimmer (22, 23), and the anode (39) of the first thyristor (35) of the two thyristors (35, 36) and the cathode (40) of the second thyristor (36) of the two thyristors (35, 36) being connected to the second terminals (28, 30) of each dimmer (22, 23), and a control circuit (41) configured to control the two thyristors (35, 36) to trigger into conduction the first thyristor (35) or the second thyristor (36) so that the AC main bus (10) powers the said load (2, 3, 4) through the triggered thyristor (35, 36), or trigger into conduction the first thyristor (35) and the second thyristor (36) so that the AC main bus (10) powers the said load (2, 3, 4) through both thyristors (35, 36), or block conduction both thyristors (35, 36) so that the said load (2, 3, 4) is not powered by the AC main bus (10).

2. The power device (5) according to claim 1, wherein the said power branch (11, 12, 13) further comprises a breaker (20, 21) connecting the input terminals (14, 15, 16) of the said power branch (11, 12, 13) and the first terminals (25, 26) of each dimmer (22, 23).

3. The power device (5) according to claim 1 or 2, wherein the said power branch (11, 12, 13) further comprises a transformer (29, 31) connecting the second terminals (28, 30) of each dimmer (22, 23) and the output terminals (17, 18, 19) of the said power branch.

4. The power device (5) according to claim 3, wherein the said power branch (11, 12, 13) further comprises a rectifier (33, 34) connected to the transformer (29, 31) of the said power branch (11, 12, 13) configured to power the load (2, 3, 4) connected to the said power branch (11, 12, 13).

5. The power device (5) according to any one of claims 1 to 4, further comprising a main breaker (B) connected to the main input terminals (6) and to the AC/AC power converter (7).

6. A facility (1) comprising a plurality of loads (2, 3, 4) and the power device (5) according to any one of claims 1 to 5, each load of the plurality of loads (2, 3, 4) being connected to a set of output terminals (17, 18, 19) of a power branch (11, 12, 13).

7. A method for controlling a power device (5) comprising:
- main input terminals (6) connected to a grid (G);
- an AC/AC power converter (7) operatively coupled to the main input terminals (6);
- an AC main bus (10) operatively coupled to the AC/AC power converter (7) and powered by the AC/AC power converter (7); and
- a plurality of power branches (11, 12, 13), each power branch (11, 12, 13) comprising:
• input terminals (14, 15, 16) connected to the AC main bus (10); and
• at least one set of output terminals (17, 18, 19) configured to be connected to a load (2, 3, 4),
at least one power branch (11, 12, 13) comprises at least one dimmer (22, 23) comprising first terminals (25, 26) operatively coupled to the input terminals (14, 15, 16) of the said power branch (11, 12, 13) and second terminals (28, 30) operatively coupled to the output terminals (17, 18, 19) of the said power branch, **characterized in that** each dimmer (22, 23) comprises two thyristors (35, 36), the cathode (37) of a first thyristor (35) of the two thyristors (35, 36) and the anode (38) of a second thyristor (36) of the two thyristors (35, 36) being connected to the first terminals (25, 26) of each dimmer (22, 23), and the anode (39) of the first thyristor (35) of the two thyristors (35, 36) and the cathode (40) of the second thyristor (36) of the two thyristors (35, 36) being connected to the second terminals (28, 30) of each dimmer (22, 23), and a control circuit (41), the method comprising:
- triggering into conduction with the control circuit (41), the first thyristor (35) or the second thyristor (36) so that the AC main bus (10) powers the said load (2, 3, 4) through the triggered thyristor (35, 36); or
- triggering into conduction with the control circuit (41), the first thyristor (35) and the second thyristor (36) so that the AC main bus (10) powers the said load (2, 3, 4) through both thyristors (35, 36); or
- blocking conduction with the control circuit (41), of both thyristors (35, 36) so the said load (2, 3, 4) is not powered by the AC main bus (10).
